# FASCICULE DE BREVET EUROPEEN

(11) **EP 0 989 931 B1**
(45) Date de publication et mention de la délivrance du brevet: **31.01.2001**
(21) Numéro de dépôt: 98930824.2
(22) Date de dépôt: 11.06.1998
(51) Int. Cl.: B29C 49/58

(54) **TUYERE DE SOUFFLAGE DE RECIPIENTS EN MATIERE PLASTIQUE ET INSTALLATION POURVUE D'UNE TELLE TUYERE**
BLASDORN FÜR BEHÄLTER AUS KUNSTSTOFF UND VORRICHTUNG DIE SO EINEN BLASDORN VERWENDET
NOZZLE FOR BLOW MOULDING PLASTIC CONTAINERS AND INSTALLATION PROVIDED WITH SAME

(30) Priorité: 16.06.1997 FR 9707609
(43) Date de publication de la demande: 05.04.2000
(73) Titulaire: SIDEL S.A., 76053 Le Havre Cédex (FR)
(72) Inventeur: BARRAY, Alphonse, F-76053 Le Havre Cedex (FR); SILORET, Patrick, F-76053 Le Havre Cedex (FR)
(74) Mandataire: Siloret, Patrick
(86) Numéro de dépôt international: FR9801208
(87) Numéro de publication internationale: WO9857794

(56) Documents cités:
- EP-A- 0 734 836
- WO-A-97/13632
- CH-A- 683 757
- US-A- 4 552 527

## Description

L'invention concerne des perfectionnements apportés aux machines de fabrication de récipients, tels des flacons ou des bouteilles, en matière plastique, par soufflage d'ébauches tels des préformes ou des récipients intermédiaires obtenus lors d'une phase préalable de transformation de la matière plastique. Elle concerne tout particulièrement les organes, appelés tuyères de soufflage, équipant ces machines.

Il est maintenant bien connu de fabriquer des récipients en matière plastique par soufflage d'ébauches en matière plastique.

Lorsque l'ébauche est une préforme, celle-ci est obtenue soit par injection de la matière plastique dans un moule d'injection et de formage, soit par extrusion soufflage de la matière plastique dans un moule de formage. La préforme subit ensuite un traitement thermique approprié, plus ou moins sophistiqué selon les caractéristiques du récipient à obtenir, et/ou est placée dans un moule de finition, contenant l'empreinte du récipient à obtenir. Une tuyère de soufflage est alors introduite dans l'ouverture (le col) de la préforme et un fluide de soufflage, généralement de l'air sous haute pression, est injecté dans la préforme pour la gonfler et plaquer la matière le long des parois du moule, permettant d'obtenir le récipient. De préférence, notamment dans les machines de la demanderesse réalisant des récipients à partir de préformes préalablement injectées, le soufflage est précédé ou accompagné d'un étirage (ou élongation) de la préforme à l'aide d'une tige d'élongation. De préférence encore, lorsque l'étirage précède le soufflage à l'aide de l'air haute pression, il est accompagné d'un présoufflage à l'aide d'air à une plus basse pression, pour éviter notamment que, lors de l'étirage, la matière ne se resserre sur la tige.

Lorsque l'ébauche est un récipient intermédiaire, celui-ci est généralement obtenu à partir d'un premier récipient, lui-même obtenu par soufflage d'une préforme dans un premier moule. Le premier récipient, après sa sortie du premier moule, subit un traitement particulier, typiquement thermique, suite à quoi on obtient le récipient intermédiaire qui est alors placé dans un second moule dans lequel le récipient intermédiaire est transformé en récipient final par injection d'un fluide de soufflage à l'aide d'une tuyère identique à celle évoquée par avant.

Les brevets européens délivrés sous les numéros 237459 et 442836, au nom de la demanderesse, décrivent deux variantes d'équipements permettant d'obtenir un premier récipient à partir d'une préforme injectée puis, après transformation du premier récipient en récipient intermédiaire, d'obtenir un récipient final avec de bonnes propriétés mécaniques, notamment lors du remplissage à chaud ou à l'aide de boissons gazeuses ou carbonatées.

Typiquement, les procédés et équipements du dernier type précité nécessitent le passage par une phase d'obtention d'un seul récipient intermédiaire. On pourrait très bien envisager l'obtention de plusieurs récipients intermédiaires successifs avant obtention du récipient final.

Les moules employés pour la fabrication de récipients finaux, ou chaque moule pour obtenir un récipient à partir duquel un récipient intermédiaire est obtenu, sont généralement en au moins deux parties, séparables ou rapprochables l'une de l'autre. Chaque partie comporte une demi-empreinte du récipient à obtenir (fond, parois, épaule).

Cependant, préférentiellement, les moules connus comportent trois parties : une partie avec l'empreinte du fond de récipient et deux parties pour constituer les parois et l'épaule du récipient. Cette structure préférée facilite le démoulage lorsque le fond du récipient possède certains types de reliefs (fonds pétaloïdes notamment).

Les parties sont séparées (écartées) l'une de l'autre lors de la mise en place de l'ébauche et lors de l'éjection du récipient. Elles sont rapprochées, et le moule est fermé lors des phases de soufflage (avec ou sans étirage et/ou présoufflage).

Un inconvénient des équipements ou machines de fabrication de récipients (intermédiaires ou finaux) tient à la structure des tuyères de soufflage qui y sont employées.

Il est connu que le col, encore appelé goulot, du récipient final, est généralement obtenu lors de la fabrication de la préforme.

Lorsque cette dernière est transformée en récipient, soit immédiatement final, soit intermédiaire, les dimensions du col ne doivent pas ou seulement très peu être modifiées. De même, et conséquemment, les dimensions du col du récipient intermédiaire ne doivent pas ou peu varier et le récipient final doit donc avoir en tous cas un col identique à celui de la préforme. En effet, le col comporte soit des filets pour recevoir un bouchon à vis, soit un bord renforcé pour recevoir une capsule sertie ou un bouchon. Il est donc très difficile de contrôler la déformation du col après la formation de la préforme, et préférable de le garder en l'état après transformations successives.

C'est pourquoi, lors des étapes de transformation de la préforme en récipient final ou intermédiaire, et, dans ce dernier cas, d'un récipient intermédiaire en un autre récipient (intermédiaire encore ou final), le col est supporté à l'extérieur du moule et n'est pas modifié par le soufflage.

La tuyère est constituée par un tube dont l'extrémité de soufflage (nez de tuyère) est resserrée pour pouvoir être insérée dans l'ouverture de l'ébauche. Typiquement, l'extrémité de la tuyère est de section tronconique. Le diamètre à la base du tronc de cône, donc de la tuyère, est inférieur à celui de ladite ouverture. En conséquence, lorsque la tuyère est introduite dans le col, un contact finit par s'établir entre le tronc de cône et le bord périphérique intérieur du buvant de l'ébauche, assurant l'étanchéité lors du soufflage et le maintien en force de l'ébauche en bonne position par rapport au moule.

Mais ce type de tuyère n'est pas totalement adapté pour les raisons suivantes :
- en raison des fortes pressions nécessaires au soufflage (typiquement 40 bars dans les machines de la demanderesse), il faut exercer une pression d'appui importante entre la tuyère et l'ébauche pour éviter les fuites. Il faut donc que le col ait une épaisseur de matière suffisamment importante pour lui conférer une rigidité suffisante afin qu'il ne soit pas déformé par la tuyère lors de l'appui. Or le prix de revient d'un récipient est lié en grande partie au coût de la matière. Une tendance qui est née il y a quelque temps est d'obtenir des ébauches à col allégé pour réduire les prix de revient, mais il existe une limite inférieure à partir de laquelle la tuyère provoque un éclatement du col.
- Un même équipement peut être utilisé pour fabriquer des séries de récipients différents. L'utilisateur est parfois conduit à modifier la personnalisation de son équipement. Si la hauteur du col est modifiée et/ou si le diamètre du col est modifié, il faut modifier le réglage de la course de la tuyère et/ou carrément changer de tuyère. D'où une perte de temps, voire un surcoût pour l'équipement;
- ces tuyères sont mal adaptées au soufflage de récipients stériles ou aseptiques, à l'aide d'un fluide stérilisant ou aseptisant, car la zone de contact entre l'intérieur du buvant et la tuyère, si elle n'a pas été aseptisée ou stérilisée avant soufflage, demeure en l'état: des particules septiques ou anti-stériles risquent de s'y trouver et d'aller contaminer l'intérieur;
- lorsqu'une tige d'élongation est présente, ce qui est la règle, celle-ci coulisse axialement à l'intérieur d'un orifice cylindrique ménagé dans la tuyère et orienté selon l'axe longitudinal de cette dernière, et un espace annulaire est laissé libre autour de la tige pour permettre le passage du fluide du soufflage autour de la tige dans cet orifice. Mais la section de cet espace est nécessairement limitée, de sorte que le passage du fluide est freiné.

L'invention a pour but de remédier à ces inconvénients.

Selon l'invention, une tuyère de soufflage, pour amener du fluide de soufflage à l'intérieur d'une ébauche supportée sous son col dans un moule de soufflage, de sorte que le col émerge du moule, la tuyère comportant un orifice d'amenée du fluide dans l'ébauche, est caractérisée en ce que l'orifice possède des dimensions telles que, lorsqu'une ébauche est en place dans le moule et la tuyère est en position de soufflage, l'orifice coiffe le col, et le rebord périphérique de l'orifice, en regard de l'ébauche constituant le nez de la tuyère, vient en appui sur le moule, et des moyens d'étanchéité sont prévus au niveau de cet appui.

La tuyère selon l'invention permet donc de s'affranchir de tous les problèmes précités :
. il n'y a plus d'appui direct sur la préforme pour assurer l'étanchéité, de sorte que des cols allégés peuvent être utilisés;
. les problèmes liés à la personnalisation sont résolus: il suffit de calibrer l'orifice, de façon à ce qu'il puisse contenir les plus grands cols que la machine sera appelée à traiter;
. puisque le fluide de soufflage arrive autour du col, des problèmes liés à l'aseptie ou la stérilisation sont résolus: le fluide de soufflage arrive aussi autour du col, de sorte que non seulement l'intérieur du récipient, mais aussi l'extérieur du col, est nettoyé;
. en dépit de la présence d'une tige d'élongation, une plus grande section de passage est offerte au fluide de soufflage puisque le nez de tuyère n'est plus à l'intérieur, mais se trouve à l'extérieur du col, d'où une meilleure efficacité de soufflage.

Dans une première variante, les moyens d'étanchéité sont fixés à l'extrémité du nez de tuyère.

Dans une seconde variante, les moyens d'étanchéité sont fixés sur le moule de l'installation à laquelle est associée la tuyère.

D'aures caractéristiques et avantages de l'invention apparaîtront à la lueur de la description ci-après, faite en regard des figures annexées, sur lesquelles :
- la figure 1 est une vue en coupe schématique d'une partie d'installation utilisant une première variante de tuyère lorsque la tuyère n'est pas en position de soufflage;
- la figure 2 est une vue en coupe, correspondant à la première variante, lorsque la tuyère est en position de soufflage;

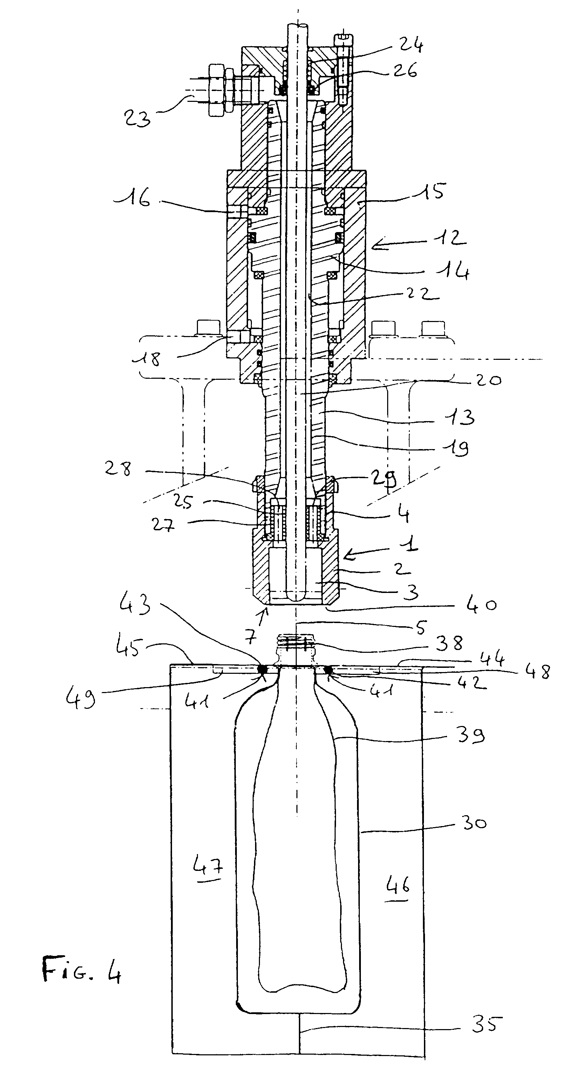

- la figure 3 est une vue simplifiée de dessus d'un moule, en position fermée, utilisable avec cette première variante ;
- la figure 4 est une vue en coupe schématique d'une partie d'installation utilisant une seconde variante de tuyère, lorsque la tuyère n'est pas en position de soufflage;
- la figure 5 est une vue en coupe, correspondant à la seconde variante, lorsque la tuyère est en position de soufflage.
- la figure 6 est une vue simplifiée de dessus d'un moule, en position fermée, utilisable avec la seconde variante.

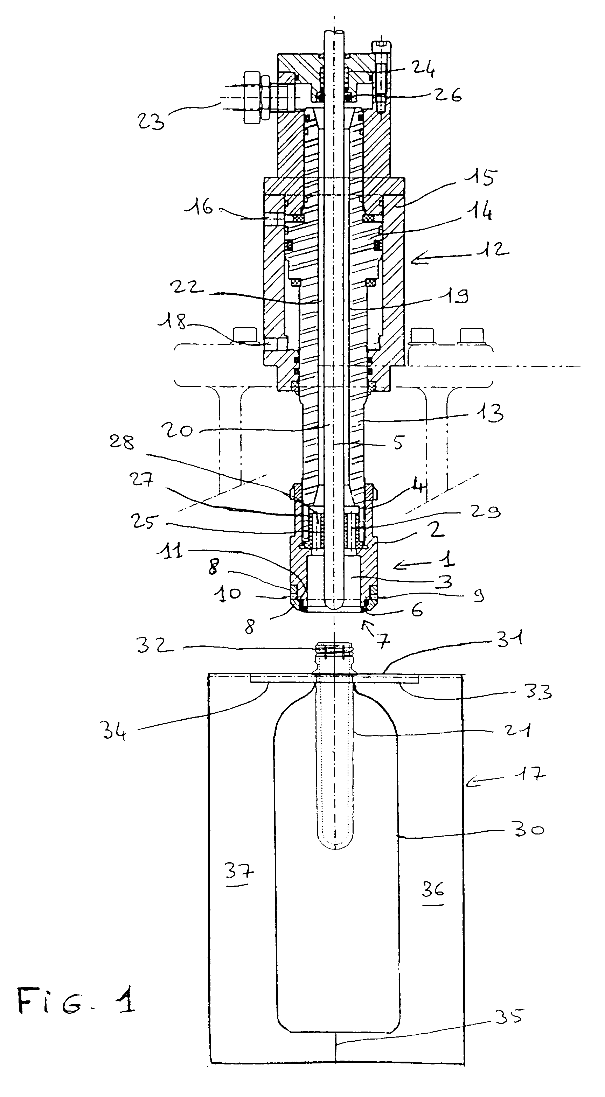

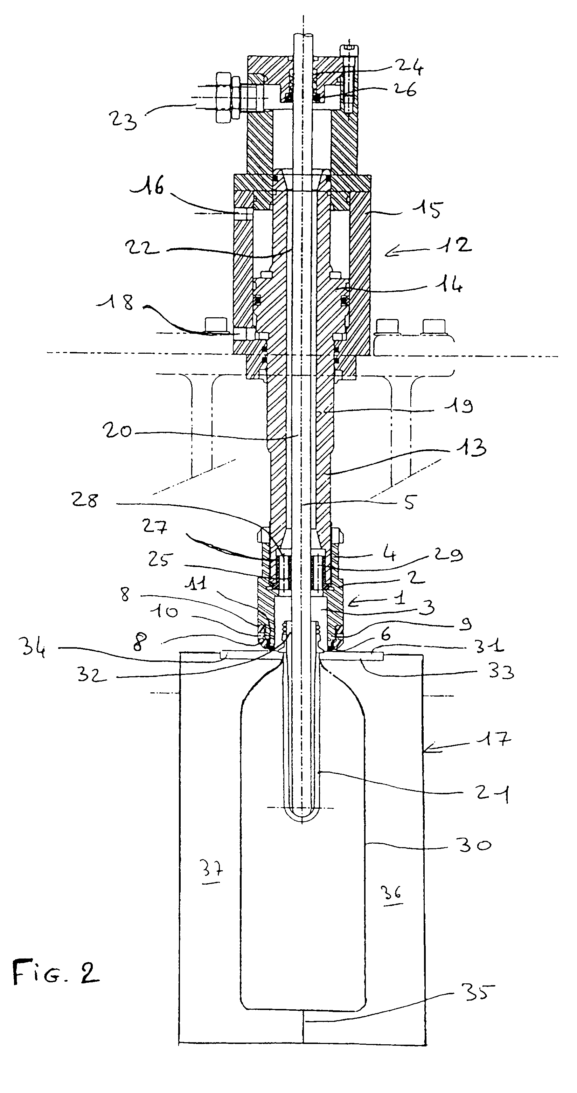

Sur les figures 1 et 2 sont réprésentés un premier mode de réalisation d'une tuyère conformément à l'invention et la partie d'équipement de soufflage à laquelle elle peut être associée.

La tuyère, désignée dans son ensemble par la référence 1, possède un corps 2 en forme de manchon sensiblement cylindrique percé, sur toute sa longueur, d'un trou coaxial constitué de deux orifices 3, 4 coaxiaux à l'axe 5 de la tuyère et communiquant entre eux par une première de leurs extrémités.

Conformément à l'invention, un premier 3 de ces orifices constitue l'orifice d'amenée du fluide dans une ébauche lorsque la tuyère est en place sur une installation de soufflage comme il sera décrit ultérieurement.

Dans le mode de réalisation illustré sur ces figures 1 et 2, un joint 6 à lèvre est fixé autour de la seconde extrémité du premier orifice 3 et émerge axialement, constituant de fait le nez 7 de tuyère. La fonction de ce joint 6 est d'assurer l'étanchéité lors du soufflage comme il sera expliqué ultérieurement. Le joint 6 est maintenu autour de la seconde extrémité du premier orifice 3 ménagé dans le corps 2 de tuyère, par exemple à l'aide d'une bague 8 de maintien, vissée autour de ladite extrémité.

De préférence, des évents 9, 10 dont la fonction sera expliquée plus loin traversent radialement l'épaisseur de la bague 8; Ces évents sont, de préférence, répartis régulièrement autour de la bague 8 et débouchent, côté intérieur de celle-ci, au niveau du plan d'appui 11 entre le corps 2 de tuyère et l'extrémité du joint 6 opposée à celle constituant de fait le nez 7 de tuyère.

De façon connue, la tuyère 1 est fixée, par son côté opposé à celui où est ménagé le premier orifice 3, à un vérin 12 de tuyère. Plus précisément, le corps 2 est rendu solidaire d'un axe 13 associé à un piston 14 coulissant dans un cylindre 15, l'ensemble piston, cylindre, axe constituant le vérin.

De préférence, comme illustré sur ces figures 1 et 2, le corps 2 de la tuyère est vissé à l'extrémité de l'axe 13. A cet effet, le second orifice 4 ménagé dans le corps 2 est taraudé et l'extrémité de l'axe 13 est filetée de manière correspondante.

Le vérin est à double effet : pour cela, un premier orifice 16 prévu à une extrémité du cylindre 15 permet d'entraîner le piston et donc la tuyère 1 vers le moule 17 et un second orifice 18 permet d'éloigner la tuyère du moule.

De façon connue, l'ensemble constitué par le piston 14 et l'axe 13 le prolongeant est percé, sur toute sa longueur, d'un orifice 19 tubulaire, coaxial à l'axe 5 de symétrie de la tuyère 1 et du vérin 12.

Une tige 20 d'élongation de l'ébauche 21 associée est placée dans cet orifice. Le diamètre intérieur de l'orifice 19 est supérieur au diamètre extérieur de la tige 20, de sorte qu'un espace annulaire 22 est ménagé à la périphérie de la tige 20, permettant le passage du fluide de présoufflage et/ou de soufflage vers le premier orifice 3 de la tuyère 1 et donc vers l'ébauche 21 en vue de la réalisation du récipient souhaité dans le moule 17.

L'espace annulaire 22 est mis en communication avec un conduit 23 d'amenée du fluide sous pression, pour le présoufflage et/ou le soufflage. Ce conduit 23 est, de façon connue, relié à une ou plusieurs sources d'amenée du fluide.

La tige 20 peut coulisser relativement à l'ensemble constitué par le cylindre 15 d'une part et le sous-ensemble piston 14, axe 13, tuyère 1. Les moyens de déplacement, connus, de la tige ne sont pas représentés: il peut s'agir d'un autre vérin, et/ou d'un mécanisme à cames et galets, ou de tout autre moyen approprié.

De façon connue, des paliers 24,25 de guidage de la tige 20 sont prévus respectivement en extrémité de cylindre 15 et à la jonction entre l'axe 13 et la tuyère 1. Par ailleurs, au moins le guidage en extrémité de cylindre est étanche. Pour cela, soit le palier 24 est étanche ou, de préférence, il est complété par un joint 26.

L'étanchéité à ce niveau a pour but d'éviter toute fuite de fluide de soufflage autour de la tige 20.

Le palier de guidage 25 à la jonction entre l'axe 13 et la tuyère 1 est par exemple constitué par une bague emmanchée dans un évidement 27 correspondant, ménagé à l'extrémité de l'axe 13, et maintenue en place par la tuyère, lorsqu'elle est montée sur l'axe 13. La bague est en outre percée sur toute sa hauteur d'au moins deux orifices 28, 29 communiquant chacun avec l'espace annulaire 22 et le premier orifice 3 de la tuyère 1, afin que le fluide de soufflage puisse circuler du conduit d'amenée 23 vers le nez de tuyère.

Bien entendu, la fixation de la tuyère sur l'axe 13 est assurée de façon étanche, soit par un serrage suffisant de la tuyère 1 sur l'axe 13, soit à l'aide de moyens rapportés tels des joints ou tout autre dispositif connu (ruban d'étanchéité, pâte à joint, filasse...).

Sur la figure 1, la tuyère 1 et la tige 20 d'élongation sont représentées en position remontée (dans le cas où le moule est situé sous la tuyère). La tuyère est donc éloignée de l'ébauche 21, et la tige 20 est effacée dans la tuyère.

L'ébauche 21, ici une préforme, est en place dans le moule 17 contenant l'empreinte 30 du récipient à obtenir.

Sur la figure 2, la tuyère est en position de soufflage. Le nez 7 de tuyère, plus précisément le joint 6 le constituant, est en appui sur le rebord 31 supérieur du moule, et la tige 20 est représentée dans une position selon laquelle son extrémité libre est en appui au fond de la préforme, c'est-à-dire dans une position précédant immédiatement l'étirage de la préforme.

Cette figure montre que les dimensions du premier orifice 3 de la tuyère 1 sont telles que le col 32 de l'ébauche 21 est largement contenu, c'est-à-dire coiffé, dans cet orifice.

De préférence, et de façon connue, la partie du rebord 31 supérieure du moule 17 sur laquelle le joint 6 vient en appui est une bague, constituée de deux demi-bagues 33,34 en vis-à-vis l'une par rapport à l'autre au niveau du plan de joint 35 entre les deux demi-moules 36,37. Cette bague est une pièce qui peut être changée.

La fonction des évents 9, 10 à proximité du nez 7 de la tuyère est d'éviter, lorsque la tuyère est écartée (remontée) du moule après soufflage, alors qu'il reste encore du fluide sous pression, que le joint 6 ne se détériore. En l'absence de ces évents, la lèvre du joint 6 aurait tendance à être chassée vers l'extérieur au commencement de la remontée du fait de la forte pression régnant dans la tuyère.

Avec les évents, dès que la tuyère commence à s'écarter du moule 17, le joint n'est plus plaqué fortement contre la bague de col 33,34.

En effet, du fait de la pression régnant à l'intérieur, la surface périphérique intérieure du joint a tendance à s'écarter de la zone sur laquelle elle est en appui dans le corps 2 de tuyère, ce qui entraîne l'apparition d'un interstice entre le joint et le corps de tuyère, permettant à une partie du fluide de s'échapper par cet interstice en direction des évents et donc de l'extérieur.

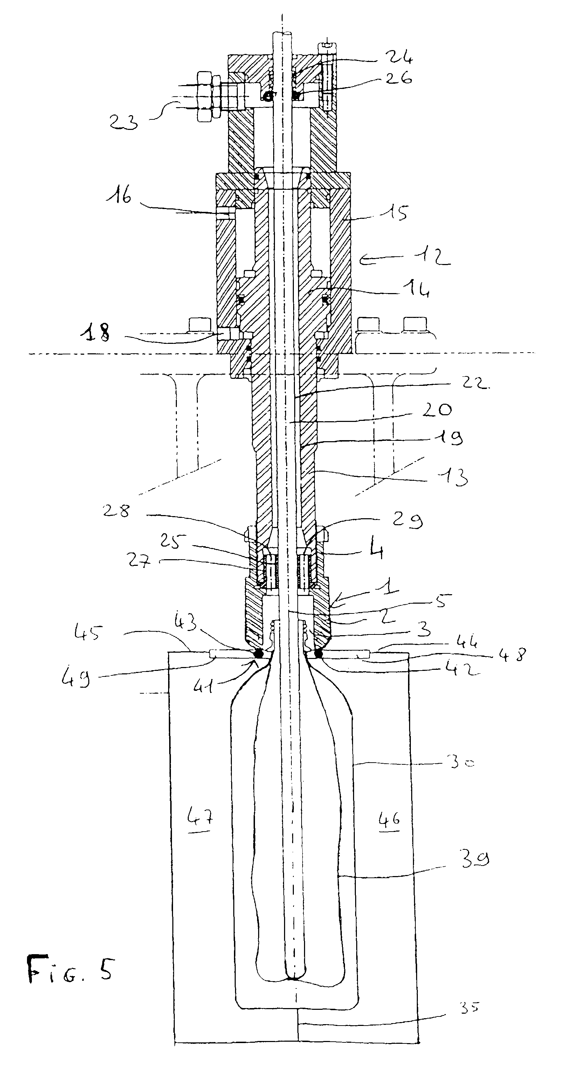

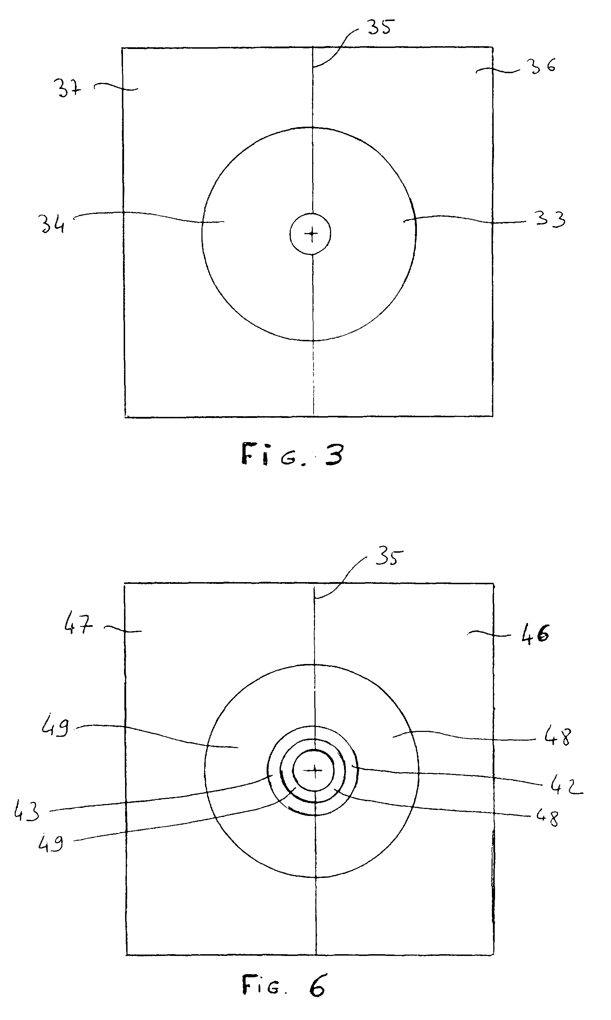

Sur les figures 4 et 5 est représentée une variante de tuyère; la figure 6 montre comment le moule doit être adapté pour coopérer avec cette variante.

La tuyère représentée sur cette variante diffère de celle représentée sur les figures 1 et 2 uniquement par les moyens pour assurer l'étanchéité entre le nez 7 de tuyère et le moule. Aussi les mêmes éléments portent-ils les mêmes références et il est renvoyé à la description des figures 1 et 2 pour la partie les concernant.

La tuyère 1 comporte un corps 2 percé de deux orifices 3 et 4.

Un premier 3 de ces orifices sert à coiffer le col 38 d'une ébauche 39, ici un récipient intermédiaire à corps rétréci tel que décrit dans le brevet européen n° 442 836 au nom de la demanderesse.

Le second orifice 4, taraudé, est vissé sur le filetage correspondant d'un axe 13 relié au piston 14 et une tige d'élongation 20 se déplace dans le vérin 12.

La différence entre cette tuyère et celle décrite sur les figures 1 et 2 tient au fait que le nez 7 de tuyère n'est plus constitué par un joint, mais par le rebord 40 de l'ouverture du premier orifice 3 vers l'extérieur, premier orifice qui se trouve alors complètement réalisé dans la masse du corps 2.

L'étanchéité est assurée, lorsque la tuyère est en place (figure 5) par un joint 41 constitué de deux portions 42,43 de joints en demi-cercle, disposées respectivement dans la paroi supérieure 44,45 de chacun des demi-moules 46,47 ou, de préférence, dans la bague de col, constituée de deux demi-bagues 48,49, disposées respectivement sur chacun des demi-moules, lorsque cette bague est présente (figure 6).

Un avantage de cette variante est que le joint tient plus facilement en place et n'est pas chassé lors des remontées de tuyère.

On a constaté, de façon surprenante, qu'une tuyère conforme à l'invention ne nécessite pas que l'ébauche 21;39 soit plaquée fermement contre le moule, au niveau de la bague de col lors du soufflage. Il est donc tout à fait possible de réaliser des récipients sans utiliser la tige 20 d'élongation qui, lorsqu'elle est en place, maintient l'ébauche dans le moule. Même lorsque la tige n'est pas utlisée, l'ébauche ne vibre pas sous l'effet du fluide et celui-ci ne s'échappe pas à l'intérieur du moule, par l'extérieur de l'ébauche. Le fluide est dirigé vers l'intérieur de l'ébauche sans problèmes particuliers.

Il est bien entendu que l'invention n'est pas limitée aux modes de réalisation décrits. En particulier, la fixation de la tuyère au vérin pourrait être assurée de toute autre manière que par l'intermédiaire d'un trou taraudé 4 et d'un filetage correspondant sur l'axe 13 du vérin; de même, la tige 20 d'élongation pourrait ne pas être présente, cette dernière n'étant qu'un accessoire non pas de la tuyère, mais de l'installation elle-même.

## Revendications

1. Tuyère (1) de soufflage pour amener du fluide de soufflage à l'intérieur d'une ébauche (21;39) supportée sous son col (32,38) dans un moule (36,37;46,47) de soufflage, de sorte que ledit col émerge d'une paroi (31;44,45) du moule, la tuyère (1) comportant un orifice (3) d'amenée du fluide dans l'ébauche, caractérisée en ce que l'orifice (3) possède des dimensions telles que, lorsque l'ébauche est en place dans un moule et la tuyère (1) est en position de soufflage, l'orifice coiffe le col, et le rebord périphérique (6;40) de l'orifice, en regard de l'ébauche, constituant le nez (7) de tuyère, vient en appui sur ladite paroi (31;44,45) du moule, et des moyens d'étanchéité (6; 42,43) sont prévus au niveau de la zone d'appui.

2. Tuyère selon la revendication 1 caractérisée en ce que les moyens d'étanchéité sont constitués par un joint (6) entourant le nez (7) de la tuyère.

3. Tuyère selon la revendication 2, caractérisée en ce que le joint est maintenu sur une extrémité du corps (2) de la tuyère par un collier (8) de serrage.

4. Tuyère selon la revendication 3, caractérisée en ce que le collier est vissé autour de ladite extrémité du corps (2).

5. Tuyère selon l'une des revendications 3 ou 4, caractérisée en ce que le collier est pourvu d'au moins un évent (9,10) traversant son épaisseur et débouchant au niveau du plan (11) d'appui entre le joint (6) et ladite extrémité du corps (2).

6. Installation de soufflage de récipients à partir d'ébauches (21;39) caractérisée en ce qu'elle comporte une tuyère selon l'une des revendications 1 à 5.

7. Installation de soufflage de récipients à partir d'ébauches (21;39) caractérisée en ce qu'elle comporte une tuyère selon la revendication 1 et les moyens d'étanchéité (42,43) sont constitués par un joint (41) supporté par la paroi du moule d'où émerge le col (32,38) et entourant ledit col.

8. Installation de soufflage selon la revendication 7, caractérisé en ce que le moule étant constitué de deux demi-moules (46;47), le joint est constitué de deux portions (42;43) portées chacune respectivement par un demi-moule.

9. Installation selon l'une des revendications 6 à 8 précédentes, caractérisée en ce que le premier orifice (3) de la tuyère est mis en communication (22,28,29) avec une tubulure (23) d'amenée de fluide.

10. Installation selon la revendication 9, caractérisée en ce que la tuyère est associée à un vérin (12) de tuyère porté par l'installation, et les communications (22,28,29) sont réalisées dans le vérin.

11. Installation selon l'une des revendications 6 à 10, caractérisée en ce qu'elle comporte une tige (20) d'élongation de l'ébauche (21;39) traversant le premier orifice (2) et pouvant coulisser relativement à celui-ci.

12. Installation selon la revendication 10, caractérisée en ce que la tuyère (1) est fixée à un axe (13) du vérin (12), ledit axe étant solidaire d'un piston (14) coulissant dans un cylindre (15) porté par l'installation.

13. Installation selon la revendication 12, caractérisée en ce que la tuyère (1) est fixée à l'axe (13) par vissage et comporte pour ce faire un second orifice (4) taraudé, et l'axe (13) est fileté de façon correspondante.

## Patentansprüche

1. Blasdüse (1) zur Zuführung von Blasfluid in das Innere eines Rohlings (21; 39), der unter seinem Hals (32, 38) in einer Blasform (36, 37; 46, 47) so gestützt wird, daß der Hals aus einer Wand (31; 44, 45) der Form heraustritt, wobei die Düse (1) eine Öffnung (3) zur Zuführung des Fluids in den Rohling aufweist, dadurch gekennzeichnet, daß die Öffnung (3) so bemessen ist, daß sie den Hals überdeckt, wenn der Rohling in der Form angeordnet ist und sich die Düse (1) in Blasformposition befindet, und der Umfangsrand (6; 40) der Öffnung gegenüber dem Rohling, der das Mundstück (7) der Düse bildet, an der Wand (31; 44, 45) der Form zur Anlage kommt und Dichtigkeitsmittel (6; 42, 43) am Anlagebereich vorgesehen sind.

2. Düse nach Anspruch 1, dadurch gekennzeichnet, daß die Dichtigkeitsmittel aus einer das Mundstück (7) der Düse umgebenden Dichtung (6) bestehen.

3. Düse nach Anspruch 2, dadurch gekennzeichnet, daß die Dichtung durch ein Klemmband (8) an einem Ende des Körpers (2) der Düse festgehalten wird.

4. Düse nach Anspruch 3, dadurch gekennzeichnet, daß das Band um das Ende des Körpers (2) geschraubt ist.

5. Düse nach Anspruch 3 oder 4, dadurch gekennzeichnet, daß das Band mit mindestens einem Lüftungsloch (9, 10) versehen ist, das seine Dicke durchquert und an der Anlageebene (11) zwischen der Dichtung (6) und dem Ende des Körpers (2) mündet.

6. Anlage zum Blasformen von Behältern aus Rohlingen (21; 39), dadurch gekennzeichnet, daß sie eine Düse nach einem der Ansprüche 1 bis 5 aufweist.

7. Anlage zum Blasformen von Behältern aus Rohlingen (21; 39), dadurch gekennzeichnet, daß sie eine Düse nach Anspruch 1 aufweist und Dichtigkeitsmittel (42, 43) durch eine Dichtung (41) gebildet werden, die von der Wand der Form gestützt wird, aus der der Hals (32, 38) heraustritt, und den Hals umgibt.

8. Anlage zum Blasformen nach Anspruch 7, dadurch gekennzeichnet, daß, da die Form aus zwei Formhälften (46; 47) besteht, die Dichtung aus zwei Teilen (42; 43) besteht, mit denen jeweils eine Formhälfte versehen ist.

9. Anlage nach einem der vorhergehenden Ansprüche 6 bis 8, dadurch gekennzeichnet, daß die erste Öffnung (3) der Düse mit einem Stutzen (23) zur Zuführung von Fluid in Verbindung (22, 28, 29) gebracht ist.

10. Anlage nach Anspruch 9, dadurch gekennzeichnet, daß die Düse einem Düsenzylinder (12) zugeordnet ist, mit dem die Anlage ausgerüstet ist, und die Verbindungen (22, 28, 29) in dem Zylinder hergestellt werden.

11. Anlage nach einem der Ansprüche 6 bis 10, dadurch gekennzeichnet, daß sie eine Stange (20) zur Dehnung des Rohlings (21; 39) aufweist, die die erste Öffnung (2) durchquert und relativ dazu verschiebbar ist.

12. Anlage nach Anspruch 10, dadurch gekennzeichnet, daß die Düse (1) an einer Achse (13) des Zylinders (12) befestigt ist, wobei die Achse mit einem in einem Rohrzylinder (15), den die Anlage aufweist, verschiebbaren Kolben (14) fest verbunden ist.

13. Anlage nach Anspruch 12, dadurch gekennzeichnet, daß die Düse (1) durch Verschrauben an der Achse (13) befestigt ist und dazu eine ein Innengewinde aufweisende zweite Öffnung (4) enthält, und die Achse (13) auf entsprechende Weise mit einem Außengewinde versehen ist.

## Claims

1. Blow-moulding nozzle (1) for conveying blowing fluid into a preform (21; 39) supported under its neck (32, 38) in a blow-moulding mould (36, 37; 46, 47) so that the said neck emerges from one wall (31; 44, 45) of the mould, the nozzle (1) comprising an orifice (3) for conveying fluid into the preform, characterized in that the orifice (3) has dimensions such that, when the preform is in place in a mould and the nozzle (1) is in the blowing position, the orifice covers the neck, and the peripheral rim (6; 40) of the orifice, facing the preform, constituting the tip (7) of the nozzle, comes to rest against the said wall (31; 44, 45) of the mould, and sealing means (6; 42, 43) are provided in the region of the bearing zone.

2. Nozzle according to Claim 1, characterized in that the sealing means consist of a seal (6) surrounding the tip (7) of the nozzle.

3. Nozzle according to Claim 2, characterized in that the seal is held on one end of the body (2) of the nozzle by a clamping collar (8).

4. Nozzle according to Claim 3, characterized in that the collar is screwed around the said end of the body (2).

5. Nozzle according to either of Claims 3 or 4, characterized in that the collar has at least one vent (9, 10) passing through its thickness and opening at the plane (11) where the seal (6) rests against the said end of the body (2).

6. Installation for blow moulding containers from preforms (21; 39), characterized in that it comprises a nozzle according to one of Claims 1 to 5.

7. Installation for blow moulding containers from preforms (21; 39), characterized in that it comprises a nozzle according to Claim 1 and the sealing means (42, 43) consist of a seal (41) supported by the wall of the mould from which the neck (32, 38) emerges and surrounding the said neck.

8. Blow-moulding installation according to Claim 7, characterized in that, with the mould consisting of two half-moulds (46; 47), the seal consists of two portions (42; 43) each borne by one of the half-moulds.

9. Installation according to one of the preceding Claims 6 to 8, characterized in that the first orifice (3) of the nozzle is placed in communication (22, 28, 29) with a fluid-conveying pipe (23).

10. Installation according to Claim 9, characterized in that the nozzle is associated with a nozzle ram (12) borne by the installation, and the communications (22, 28, 29) are achieved in the ram.

11. Installation according to one of Claims 6 to 10, characterized in that it comprises a rod (20) for lengthening the preform (21; 39) passing through the first orifice (2) and able to slide relative thereto.

12. Installation according to Claim 10, characterized in that the nozzle (1) is fixed to a spindle (13) of the ram (12), the said spindle being secured to a piston (14) sliding in a cylinder (15) borne by the installation.

13. Installation according to Claim 12, characterized in that the nozzle (1) is fixed to the spindle (13) by screwing and for this purpose comprises a tapped second orifice (4), and the spindle (13) is threaded accordingly.
